# EUROPEAN PATENT APPLICATION

(11) **EP 4 553 016 A1**
(43) Date of publication of application: **14.05.2025**
(21) Application number: 23208516.7
(22) Date of filing: 08.11.2023
(51) Int. Cl.: B65G 54/02, E01B 25/30

(54) **TRACK MODULE FOR A LINEAR MOTOR CONVEYING SYSTEM, TRACK SYSTEM, LINEAR MOTOR CONVEY-ING SYSTEM AND CORRESPONDING METHODS**

(71) Applicant: Robert Bosch GmbH, 70442 Stuttgart (DE)
(72) Inventor: Van Der Woudem Lars, 5644 EA Eindhoven (NL); Tielen, Niels, 4871 LM Etten-Leur (NL); Korbacher, Michael, 97537 Wipfeld (DE); Spruit, Louis, 5502 CA Veldhoven (NL); Faassen, Ronald, 5351 LA Berghem (NL); Peters, Piet, 5731 EN Mierlo (NL); Aarden, Walteer, 4891 ZJ Rijsbergen (NL); Jacobs, Roy, 5685 DV Best (NL); Jans, Max, 5688 PG Oirschot (NL)

(57) **Abstract**

The invention relates to a track module track module (401, 401') for a linear motor conveying system, said track module having a conveying path for a carrier module to be received in said track module, said track module having two ends and the conveying path extending from a first one to a second one of said two ends, wherein said track module (401, 401') comprises a track component, wherein said track module (401, 401') comprises at least two supporting structures, preferably, rods, each configured to act as one of at least two bearing surfaces for wheels of said carrier module, wherein at least one of said at least two supporting structures is, at at least one of the two ends, configured with a free hanging end (431.1E, 431.1E') such that, within a section along the conveying path, said free hanging end is not in contact with the track component.

## Description

The present invention relates to a track module for a linear motor conveying system, to a track system comprising multiple of said track modules, to a linear motor conveying system, to a method for setting up such track system, and to a method for replacing a track module. The linear motor conveying system comprises multiple track modules and one or more carriers to be guided in the one or more track modules.

### Background of the invention

Linear conveying systems like linear motor conveying systems can be used in different applications, e.g., industrial applications. For example, linear motor conveying systems can be used in the field of high-speed conveyance solutions for in-machine and inter-machine transportation. Such solutions can be inverted linear motor systems, which can control small workpiece carriers accurately and with high dynamics. The carriers themselves can be passive.

### Disclosure of the invention

According to the invention, a track module, a track system, a linear motor conveying system, and corresponding methods with the features of the independent claims are proposed. Advantageous embodiments are subject-matter of dependent claims and of the following description.

The invention relates to linear motor conveying systems and the track modules used therein. Such a linear motor conveying system comprises one or more track modules and one or more carriers to be guided in the one or more track modules. The track modules can be standardized modules, multiple of such modules can be connected to each other to form a track system. A track module, for example, has or defines at least one conveying path, i.e., a path along which the carrier modules are to be guided and moved. Such track modules can be of different types, e.g., straight modules, curve modules, and switch modules. Such different modules in required numbers can be connected to from a track system according to specific needs. While a straight modules and curve modules typically have one conveying path, a switch module can have one conveying path split into two conveying paths.

A track module comprises a track component and at least two, preferably four or six, supporting structures, preferably, rods, each configured to act as one of at least two (e.g., four or six) bearing surfaces for wheels of a carrier module to be received in the track module; these supporting structures or rods can be used to guide the carrier modules. The track component can comprise recesses, in which said supporting structures or rods can be assembled. In addition, such track module also comprises supporting structures or rods are, in particular, assembled along the conveying path, with a certain distance to it.

In such track system, the track modules are typically installed or set up separately and also comprise the motor components (or motor units), and, e.g., sensors and electronics. To deal with thermal expansion of the track modules due to the heat generation under load, a gap between two neighbouring track modules can be provided. Because the supporting structures or rods (guide rails) are part of the track module, there is also a gap between the supporting structures or rods of neighbouring track modules. The gap allows the track modules and supporting structures or rods (guide rails) to expand without introducing displacements in other directions than the movement direction of the carrier modules, i.e., along the conveying path. Furthermore, for smooth movement and guiding of the carrier modules, the supporting structures or rods (guide rails) should to be aligned with each other to eliminate tolerances.

The alignment of the supporting structures can be done after the installation of the motor components, to reduce the tolerances between the supporting structures (guide rails) and motors. This, however, can create a difficult and timely process when dealing with the transitions between the motor components or units and the entire track modules.

An embodiment of the invention relates to such a track module, having a conveying path for a carrier module to be received in said track module. The track module has two ends and the conveying path extends from a first one to a second one of said two ends. Further, the track module comprises a track component, and at least two supporting structures, preferably, rods, each configured to act as one of at least two bearing surfaces for wheels of said carrier module, as mentioned above. Preferably, each of the at least two supporting structures is arranged in a respective one of the at least two recesses of the track component.

At least one of said at least two supporting structures is, at least one of the two ends, configured with a free hanging end such that, within a section along the conveying path, said free hanging end is not in contact with the track component. In case the track comprises a recess for the supporting structures, said at least one of said at least two supporting structures configured with a free hanging end is arranged in such recess, apart from said free hanging end.

The free hanging end of a supporting structure or rod results in a certain flexibility of said free hanging end. Thus, when a wheel of a carrier module passes a gap between two neighbouring track modules, a potential misalignment, e.g., due to thermal expansion, and/or forces acting on the wheel and carrier module due to such misalignment are reduced. This allows for the thermal expansion of the track modules and supporting structure in movement or conveying direction, and the supporting structure can deal with tolerances in all directions (X, Y and Z-directions). Additionally, this provides advantages in easy expansion of the system and replacing track modules as will be explained later.

In an embodiment, at least one of said at least two supporting structures is, at both of the two ends, configured with a free hanging end. In an embodiment, all of the at least two supporting structures are, at one or both of the two ends configured with the free hanging end. This improves operation of the entire system.

Each of the at least two supporting structures is arranged in a respective one of the at least two recesses of the track component.

In an embodiment, the at least two supporting structures are made of harder material than the track component. In an embodiment, the track component is made of aluminum. In an embodiment, the at least two supporting structures are made of steel. This allows improving the lifetime of the rods.

In an embodiment, the track component comprises, along at least part of a conveying path, a first side part, a second side part and a bottom part, wherein the first side part and the second side part are arranged opposite to each other. The bottom part preferably is configured to be placed on and/or to be oriented towards and/or to be mounted to a ground surface. Thus, the bottom part can be oriented essentially horizontally, and the first and second side parts can be oriented essentially vertically. The track component can be U-shaped, seen in cross section through the conveying path or a direction of the conveying path, for example (with the first and second side parts the legs of the U).

At least a first one of the at least two bearing surfaces is arranged at the first side part, and at least a second one of the at least two bearing surfaces is arranged at the second side part, such that the at least one first bearing surface and the at least one second bearing surface face each other. The track module can also comprise more than two bearing surfaces, for example, two or three first and two or three second bearing surfaces. This requires more than two support structures. The number of bearing surfaces typically should match with the number and/or arrangement of wheels of a carrier module.

Such track module with two side parts allows receiving a carrier module between the first side part and the second side part. Such carrier module can comprise at least two wheels. In an embodiment, the track module is configured such that the at least one first bearing surface matches with at least a first wheel of the carrier module, and that the at least one second bearing surface matches with at least a second wheel of the carrier module. If more bearing surfaces are provided at the track module, more corresponding wheels can be provided at the carrier module. With respect to the bearing surface and the wheels, matching means that a wheel can be guided by and roll on a respective bearing surface.

In an embodiment, the track module further comprises two electro-magnetic motor components, each preferably comprising one or more electric coils. A first one of the two electro-magnetic motor components is arranged at the first side part, and a second one of the two electro-magnetic motor components is arranged at the second side part, such that the first electro-magnetic motor component and the second electro-magnetic motor component face each other. Preferably, the track module is configured such that the first electro-magnetic motor component matches with a first counterpart electro-magnetic motor component, preferably comprising one or more permanent magnets, of the carrier module, and that the second electro-magnetic motor component matches with a second counterpart electro-magnetic motor component, preferably comprising one or more permanent magnets, of the carrier module.

In an embodiment, the first electro-magnetic motor component is fixed to the first side part by means of gluing and/or screwing, and/or the second electro-magnetic motor component is fixed to the second side part by means of gluing and/or screwing. This allows simple, fast and safe fixation.

Another embodiment of the invention relates to a track system comprising multiple track modules in one of the embodiments described above. Two of said multiple track modules are connected to each other with a gap in-between and such that the respective conveying paths from a combined conveying path. Preferably, said two track modules are connected to each other by means of track connection means fixed to the respective track component. The track connection means can be part of the track system. It is noted that each set of two neighbouring track modules in the track system can be connected in this way. In such tracking system, the gap allows thermal expansion and a carrier module passing such gap does not experience strong forces, or at least less forces, due to the flexible free hanging ends.

In an embodiment said two track modules are arranged such that two respective free hanging ends, one of each of said two track modules, face each other. If each set of two neighbouring track modules is configured in this way, the track modules have to comprise support structures configured with a free hanging end at each of both ends. Having a free hanging end just before and after the gap, forces acting on a passing carrier module are further reduced.

In an embodiment said two respective free hanging ends are connected to and aligned with each other. While without connection the forces acting on a passing carrier module reduced due to the flexibility of the free hanging ends, when connected and aligned, the forces are reduced due to reduced misalignment. Even if a thermal expansion or other reasons result in a misalignment of the track components, the supporting structures will still be aligned, potentially with some curves, due to the connection.

In an embodiment, the track system further comprises a support structure connecting element, wherein said two respective free hanging ends are connected to each other by means of said support structure connecting element. It is noted that such a support structure connecting element can be provided for each set of two free hanging ends to be connected. Such support structure connecting element can be inserted after placing the track modules next to each other or during such placing.

In an embodiment, said supporting structures configured with a free hanging end are configured as rods, and said support structure connecting element is configured as clip element. Such clip element can have a C-shaped cross section (seen in a plane perpendicular to the conveying path). Such clip element can easily be inserted and provided onto both free hanging ends. Such clip element can be made of or comprise, for example, stainless steel, hardened steel or aluminium as material.

In an embodiment, each of said two track modules comprises a clip recess in the respective track component for receiving part of said clip element, and said clip element is configured such that part of each of said free hanging end is contactable by a wheel of said carrier module. Such clip recess is different form the recess for arranging the support structure or rod; in particular, such clip recess can be a larger recess in order to provide space for the clip element. It is noted that such a support structure connecting element can be provided for each set of two free hanging ends to be connected. Such support structure connecting element can be inserted after placing the track modules next to each other or during such placing.

In an embodiment, said supporting structures configured with a free hanging end are configured as rods having a pin hole at the end side of the free hanging end, and said support structure connecting element is configured as dowel pin inserted into each of the respective pin hole of the two respective free hanging ends facing each other. In this way, no clip recess is required in the track component. Nevertheless, such dowel pin provides alignment of the free hanging ends.

It is noted that both types of support structure connecting elements, clip element and dowel pin with pin holes, can be used, be it for the same set of two free hanging ends to be connected or for different sets within the track system.

In an embodiment, said supporting structures configured with a free hanging end are configured as rods, one of said supporting structures having a pin hole at the end side of the free hanging end and another one of said supporting structures having a pin at the end side of the free hanging end, wherein the pin is inserted into said pin hole. This allows connection and alignment, similarly to the dowel pin mentioned above. While this solution does not require an additional support structure connecting element, the track modules have to be provided with a pin hole at one end and a in at the other end, and the track modules need to be oriented correctly when connected.

It is noted that this type of connection can also be combined with structure connecting elements, the clip elements, be it for the same set of two free hanging ends to be connected or for different sets within the track system.

Another embodiment of the invention relates to a linear motor conveying system, comprising the track system as described above, and one or more carrier modules to be received and guided in the multiple track modules, to be guided therein. The one or each of the more carrier modules is received or receivable in the one or each of the more track modules, wherein the one or each of the more carrier modules comprises a carrier component and at least two wheels. In order to connect several track modules to each other, appropriate track connection means like screws or form fittings can be provided for mechanical connection. Also, electrical connection of the electro-magnetic motor components should be provided.

In an embodiment, the linear motor conveying system further comprises a controlling system for controlling the linear motor conveying system to move the one or each of the more carriers within the one or more track modules. This can comprise controlling (and powering) the electro-magnetic motor components, e.g., the coils, of the track modules in appropriate way.

Such carrier module can comprise a carrier component and at least two wheels, e.g., four or six wheels. The carrier module can be configured to be received between a first side component and a second side component of a track module, like the track module described above.

At least a first one of the wheels and at least a second one of the wheels are arranged at the carrier component opposite to each other, such that the at least one first wheel faces the first side component and the at least one second wheel faces the second side component, when received in the track module.

In an embodiment, the carrier module can further comprise two counterpart electro-magnetic motor components. A first one of the two counterpart electro-magnetic motor components and a second one of the two counterpart electro-magnetic motor components are arranged at the carrier component opposite to each other, such that the first counterpart electro-magnetic motor component faces a first electro-magnetic motor component of the track module and the second counterpart electro-magnetic motor component faces a second electro-magnetic motor component of the track module, when received in the track module.

Another embodiment of the invention relates to a method for setting up a track system as described above. Said two track modules (which are to be connected) are placed next to each other, and are then connecting to each other. Further, said two respective free hanging ends are connected to each other, preferably, by means of a support structure connecting element. This can be repeated for each set of two neighbouring track modules.

Another embodiment of the invention relates to a method for replacing a selected track module of a track system as described above. If necessary, at least one neighbouring track module, neighbouring the selected track module, is disconnected from the selected module. Then, the at least one neighbouring track module is moved away from the selected module, along the conveying path. If two neighbouring track modules are present, both can be moved away from the selected module, along the conveying path. Such neighbouring module needs to be moved only such far that the connection between the free hanging ends is or can be resolved. Then, the selected track module is removed, and a new track module is placed at the former place of the removed selected track module. Then, the at least one neighbouring track module is moved towards the new track module along the conveying path, and if required, the at least one neighbouring track module is connected to the new track module. Further, if required, connection between the free hanging ends can again be provided.

Further advantages and embodiments of the invention result from the description and the attached drawing.

It goes without saying that the features mentioned above and those still to be explained below can be used not only in the combination specified in each case, but also in other combinations or on their own, without departing from the scope of the present invention.

The invention is shown schematically in the drawing using an exemplary embodiment and is described in detail below with reference to the drawing.

### Brief description of the drawing

- Fig. 1: shows a linear motor conveying system for explaining the invention in a perspective view;
- Fig. 2: shows a track module of a switch type in a perspective view;
- Fig. 3a: shows a track module and a carrier module according to an embodiment in a perspective view;
- Fig. 3b: shows the track module and the carrier module of Fig. 3a in a cross section;
- Fig. 3c: shows the carrier module of Fig. 3a in a perspective view;
- Fig. 4: shows a track system according to an embodiment;
- Fig. 5: shows a track system according to another embodiment;
- Fig. 6: shows a track system according to another embodiment;
- Fig. 7: shows a track system according to another embodiment; and
- Fig. 8: shows a method according to an embodiment.

### Detailed description of the drawing

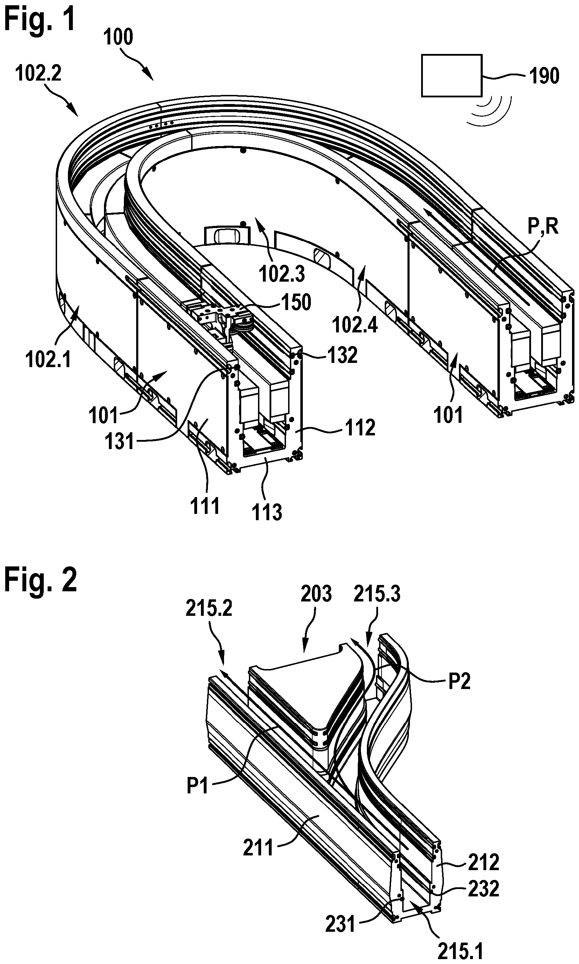

Fig. 1 schematically illustrates a linear motor conveying system 100 in a perspective view. The linear motor conveying system 100 comprises, by means of example, several track modules. Depending on the needs of a particular application for the linear motor conveying system, different types and numbers of track modules can be provided and also connected to each other to provide a track system. Types of track modules are, for example, straight modules, curve modules and switch modules.

By means of example, two track modules 101 are straight modules, and four parts or regions 102.1, 102.2, 102.3, 102.4 form a curve modules, i.e., the curve module can be a single track module having a single track component. The straight modules 101 are both identical, in the example shown in Fig. 1. It is noted, however, that straight modules can have a different length, where a length is to be seen in moving or conveying direction along a conveying path P, indicated for a straight module 101 in Fig. 1.

The parts or segments 102.1, 102.2, 102.3, 102.4 indicate, by means of example, regions having different radii and/or curve shapes. It is noted that the curved track module in Fig. 1 is only shown schematically, in particular, with regard to the way it is built.

The straight module 101 at the lower left side in Fig. 1 will be described in more detail. The track module 101 comprises a track component 110, and at least two bearing surfaces 131, 132. By means of example, six bearing surfaces are shown in Fig. 1, while only two of them are indicated with a reference numeral.

Further, the track component 110 comprises a first side part 111, a second side part 112 and a bottom part 113, wherein the first side part 111 and the second side part 113 are arranged opposite to each other.

At least a first one of the at least two bearing surfaces (here, e.g., bearing surface 131) is arranged at with the first side part 111, and at least a second one of the at least two bearing surfaces (here, e.g., bearing surface 132) is arranged at the second side part 112, such that the at least one first bearing surface 131 and the at least one second bearing surface 132 face each other.

The bearing surfaces are formed by support structures like rods, arranged in or inserted into recesses in the first side part 111 and the second side part 112.

It is noted that this way of how a track module is formed, does not only apply to straight module 101 but also to other types of modules like the curve modules 102.1, 102.2, 102.3, 102.4.

Each of the straight modules and the curve modules shown in Fig. 1, have a conveying path, although only shown for one straight module 101, from a respective first one to a respective second one of two ends of the straight module 101. When the track modules are connected to each other, the individual tracking paths are also connected to from a cumulated or combined conveying path, along which the carrier modules are guided and conveyed. Note that carrier modules can be moved or conveyed in both directions of a conveying path, irrespective of the direction of the arrow indicating the conveying path P.

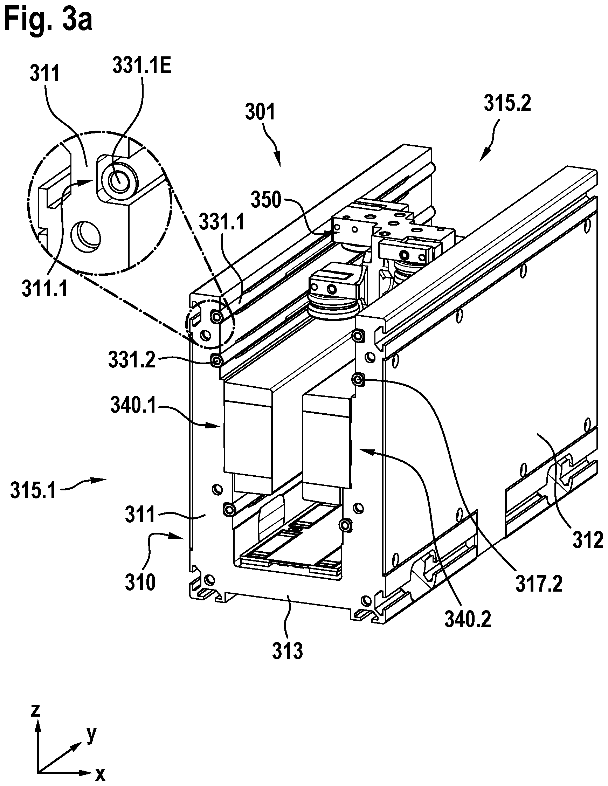

Further, the linear motor conveying system 100 comprises, by means of example, several carrier modules 150. The track module 101 is configured to receive such a carrier module 150 between the first side part 111 and the second side part 112, in particular, such that the at least one first bearing surface 131 matches with at least a first wheel of the carrier module 150, and that the at least one second bearing surface 132 matches with at least a second wheel of the carrier module 150. This is shown in Fig. 1 but will be illustrated and described in more detail later with respect to Figs. 3a to 3c.

Further, the linear motor conveying system 100 comprises, in an embodiment, a controlling system 190 for controlling the linear motor conveying system 100 to move the carrier modules 150 within the track modules, i.e., in moving or conveying direction R (along path P), indicated in Fig. 1. It is noted that such conveying direction R is a straight line for straight modules, but it is a curved line for curved modules. For operating the linear motor conveying system 100, by means of the controlling system 190, electro-magnetic motor components, for example, at the track modules, have to be controlled.

Fig. 2 schematically illustrates a track module 203 in a perspective view. Track module 203 is a switch module, i.e., a track module of the switch type. Contrary to straight modules or curve modules, the carrier module is not restricted to move from one of two ends to the other of the two ends, i.e., enter the track module at a first end and leave the track module at a second end (having a single conveying path). Rather, the carrier module can enter the switch module at a first end 215.1 and leave the switch module at either a second end 215.3 or at a third end 215.3. The switch module 203 has two conveying paths P1 and P2, where conveying path P2 diverts from conveying path P1.

In order to control a linear motor conveying system comprising such switch module, in order to make the carrier module using conveying path P1, leaving at the second end 215.2 or using conveying path P2, leaving at the third end 215.3, electro-magnetic motor components, for example, at the track modules (not shown here), are to be controlled such that the carrier module is forced either to the second end 215.2 or to the third end 215.3. If the carrier module enters the switch module at the second end 215.2 or at the third end 215.3, in both cases, the carrier module with leave the switch module 203 at the first end 215.3. In other words, both conveying paths P1, P2 are merged.

Similar to the straight modules and curve modules shown in Fig.1, the switch module 203 comprises a track component 210 for a conveying path, e.g., P1. The switch module 203 further comprises at least two bearing surfaces 231, 232. By means of example, six bearing surfaces are shown in Fig. 2, while only two of them are indicated with a reference numeral.

Further, the track component 210 comprises, along the conveying path P1, a first side part 211, a second side part 212 and a bottom part 213, wherein the first side part 211 and the second side part 213 are arranged opposite to each other. It is noted that the second side part 211 is interrupted along the conveying path P1, due to a diversion of conveying path P2. Similar to the conveying path P1, the track component comprises, along the conveying path P2, a first side part, a second side part and a bottom part (not indicated with reference numerals here).

Switch modules like the one shown in Fig. 2, can be used together with straight modules and curve modules like the one shown in Fig. 1, in order to create a (complex) track system and linear motor conveying system. It should be considered, that the bearing surfaces of the different track modules should be of the same type.

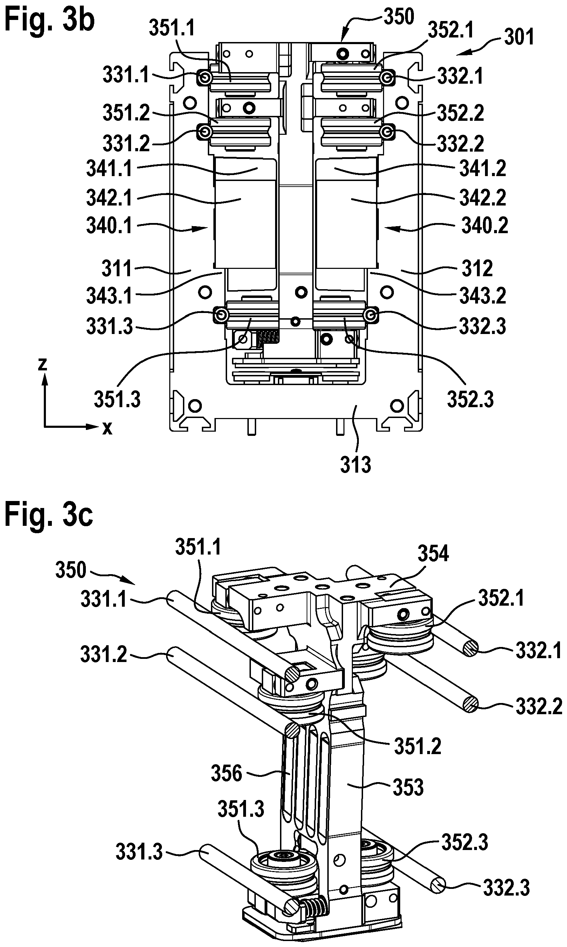

Fig. 3a illustrates a track module 301 and a carrier module 350 according to an embodiment in a perspective view. Fig. 3b illustrates the track module 301 and the carrier module 350 of Fig. 3a in a cross section in the x-y-plane. Fig. 3c illustrates the carrier module 350 of Fig. 3a in a perspective view but without most parts of the track module. Figs. 3a, 3b, 3c shall be described together in the following. It is noted that the axes could also be defined different, e.g., with the conveying direction in the x-direction.

By means of example and for explanation of the basic structure and composition of a track module, track module 301 is a straight module. Track module 301 can, basically, correspond to track module 101 of Fig. 1, however, showing additional components and, in particular, having specific configurations relating to the support structures. The following explanations apply also to other types of track modules.

The track module 301 comprises a track component 310, and, by means of example, six support structures, 331.1, 331.2, 331.3, 332.1, 332.2, 332.3, formed as rods, and acting as bearing surfaces. Further, the track component 301 comprises, along a conveying path, a first side part 311, a second side part 312 and a bottom part 313, wherein the first side part 311 and the second side part 313 are arranged opposite to each other. The conveying path is not denoted in Fig. 3, but extends along the y-direction, from first end 315.1 of the track module 301 to a second end 315.2 of the track module, and can be similar or equal to conveying path P shown in Fig. 1.

By means of example, the track component 310, and also each of the first side part 311, the second side part 312 and the bottom part 313, are formed to have a structure with struts or ribs, rather than a full material structure. This allows using less material while still having a robust structure. For example, the bottom part 313 and parts of each of the first side part 311 and the second side part 312 have a double wall structure with supporting ribs between the two walls.

Three rods (here, e.g., rods 331.1, 331.2, 331.3) are arranged at the first side part 311, and three second rods (here, e.g., rods 332.1, 332.2, 332.3) are arranged at the second side part 312, such that the at first rods 331.1, 331.2, 331.3 and the second rods 332.1, 332.2, 332.3 - or, rather, the bearing surfaces provided by them - face each other, i.e., are oriented towards each other. In other words, all of the bearing surfaces are provided at an inner side of the respective first and second side parts, where the conveying path is formed.

The support structures like or rods acting as the bearing surfaces are arranged in or inserted into recesses in the first side part 311 and the second side part 312, respectively. By means of example, one such recess is indicated by 317.2 in Fig. 3a.

Further, as indicated in an enlarged section in the top left of Fig. 3a, the rod 331.1 is configured with a free hanging end 331.1E at the first end 315.1 such that, within a section along the conveying path said free hanging end is not in contact with the track component or, as shown in Fig. 3a, the first side part 311 as a part of the track component 310. A free space 311.1 is provided between the first side part 311 and the rod 331.1. Although only shown for the rod 331.1 at the first end 315.1, the rod 331.1 can also have a free hanging end at the second end 315.2. Similarly, the rod 332.1 can have a free hanging end at the first end 315.1 and also at the second end 315.2. Further, also the other rods 331.2, 331.3 and 332.2, 332 can have two such free hanging ends each.

In an embodiment, the track 301 further comprises two electro-magnetic motor components, a first electro-magnetic motor component 340.1 and a second electro-magnetic motor component 340.2. The first electro-magnetic motor component 340.1 and the second electro-magnetic motor component 340.2 extend along the conveying path (here: in y-direction). The first electro-magnetic motor component 340.1 is arranged at the first side part 311, and the second electro-magnetic motor component 340.2 is arranged at the second side part 312, such that the first electro-magnetic motor component 340.1 and the second electro-magnetic motor 340.2 component face each other.

In an embodiment, the first electro-magnetic motor component 340.1 comprises one or more electric coils 341.1 (actually covered by epoxy in this Fig); a number of the electric coils can depend on the way how the coils are manufactured. Further, the first electro-magnetic motor component 340.1 can comprise one or more magnetic or ferromagnetic cores or a structured magnetic core 342.1, e.g., made of iron. Such magnetic or ferromagnetic core increases the magnetic forces produced by the electric coils. Further, the first electro-magnetic motor component 340.1 can comprise a holding or fixing structure 343.1 (only schematically illustrated) for fixing the coils and magnetic core to the first side part 311. The first electro-magnetic motor component 340.1 can be fixed to the first side part 311 by means of gluing and/or screwing, for example.

Similarly, the second electro-magnetic motor component 340.2 comprises one or more electric coils 341.2; a number of the electric coils can depend on the way how the coils are manufactured. Further, the second electro-magnetic motor component 340.2 can comprise one or more magnetic or ferromagnetic cores or a structured magnetic core 342.2, e.g., made of iron. Such magnetic or ferromagnetic core increases the magnetic forces produced by the electric coils. Further, the second electro-magnetic motor component 340.2 can comprise a holding or fixing structure 343.2 for fixing the coils and magnetic core to the second side part 312. The second electro-magnetic motor component 340.2 can be fixed to the second side part 312 by means of gluing and/or screwing, for example.

In an embodiment, the bottom part 313 is configured to be placed on and/or to be oriented towards and/or to be mounted to a ground surface. Such ground surface would be below the bottom part 313, seen in z-direction in Figs. 3a, 3b. In an embodiment, the bottom part 313 can comprise one or more holes facing the ground surface. This allows for cleaning out small piece of debris. Also, any fluid, e.g., water, is allowed to drain when used in an IP65 type of environment, for example.

The track module 301 is configured to receive a carrier module 350 between the first side part 311 and the second side part 312 and is, preferably, configured such that the first bearing surfaces provided by rods 332.1, 332.2, 332.3 match with respective first wheels of the carrier module 350, and that the second bearing surfaces provided by rods 332.1, 332.2, 332.3 match with respective second wheels of the carrier module 350.

While Figs. 3a, 3b show the carrier module 350 being received in the track module 301, Fig. 3c shows the carrier module 350 as such. In addition, Fig. 3c shows the six rods 331.1, 331.2, 331.3, 332.1, 332.2, 332.3 acting as the bearing surfaces. The carrier module 350 comprises a carrier component 353 and, by means of example, six wheels, three first wheels 351.1, 351.2, 351.3, and three second wheels 352.1, 352.2, 352.3 (note that wheel 352.2 is not visible in Fig. 3c). The carrier module 350 is configured to be received between the first side part 311 and the second side part 312 of the track module 301.

By means of example, three first wheels 351.1, 351.2, 351.3 and the three second wheels 352.1, 352.2, 352.3 are arranged at the carrier component 353 opposite to each other, such that three first wheels 351.1, 351.2, 351.3 face the first side component 311 and the three second wheels 352.1, 352.2, 352.3 face the second side component 312, when received in the track module 301. This can be seen in Figs. 3a, 3b. Each of the wheels 351.1, 351.2, 351.3, 352.1, 352.2, 352.3 matches with a respective one of the six rods 331.1, 331.2, 331.3, 332.1, 332.2, 332.3 or the bearing surfaces provided. This can be seen in Fig. 3c. With respect to the bearing surface and the wheels, matching means that a wheel can be guided by and roll on a respective bearing surface. A bearing surface could, thus, also be called a rolling surface. The wheels, for example, can comprise a groove matching with the bearing surface.

In an embodiment, the carrier module 350 further comprises two counterpart electro-magnetic motor components, a first counterpart electro-magnetic motor component 356 (shown in Fig. 3c) and a second counterpart electro-magnetic motor component (not visible in Fig. 3c). Each of such counterpart electro-magnetic motor component can comprise one or more permanent magnets, for example. The first counterpart electro-magnetic motor component 356 and the second counterpart electro-magnetic motor component 356 are arranged at the carrier component 353 opposite to each other, such that the first counterpart electro-magnetic motor component 356 faces the first electro-magnetic motor component 340.1 of the track module 301 and that the second counterpart electro-magnetic motor component faces the second electro-magnetic motor component 340.2 of the track module 301, when received in the track module 301. This can be seen in Fig. 3a.

The first counterpart electro-magnetic motor component 356 matches with the first electro-magnetic motor component 340.1, i.e., these two components electro-magnetically interact with each other in order to from a linear electro-magnetic motor. This also, typically, requires an air gap of appropriate size between these two components. Similarly, the second counterpart electro-magnetic motor component matches with the second electro-magnetic motor component 340.2, i.e., these two components electro-magnetically interact with each other in order to from a linear electro-magnetic motor. This also, typically, requires an air gap of appropriate size between these two components. Thus, the track module 301 allows receiving a state of levitation of the carrier module 350 between the two side parts of the track module 301.

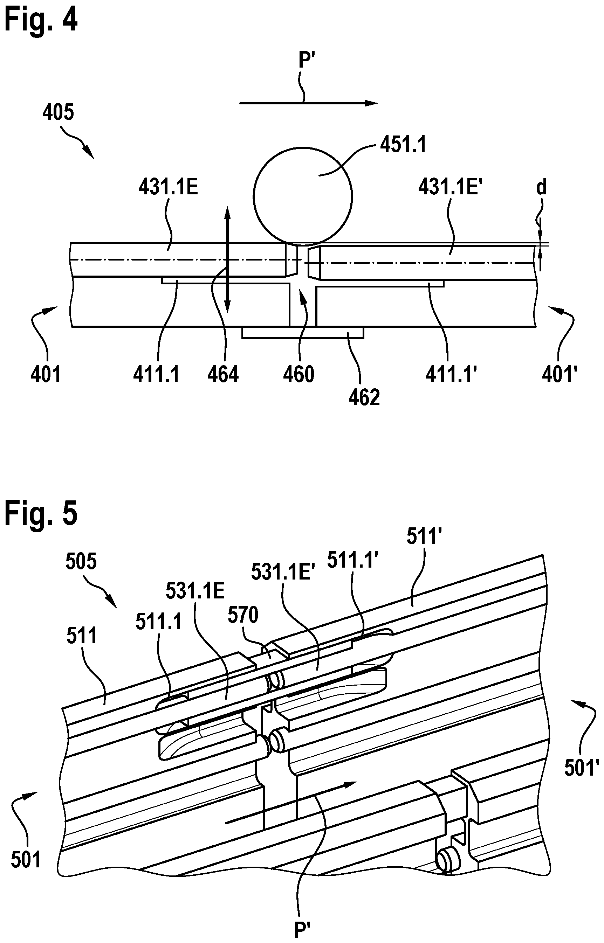

Fig. 4 schematically illustrates a track system 405 according to an embodiment. The track system 405 comprises multiple track modules, parts of two of which are shown, a track module 401 and a track module 401'. Each of track module 401 and 401' can correspond to track module 301, for example. The two track modules 401, 401' are connected to each other with a gap 460 in-between and such that the respective conveying paths from a combined conveying path P'. By means of example, the two track modules 401, 401' are connected to each other by means of track connection means 462 fixed to the respective track component.

For track module 401 the free hanging end 431.1E and a corresponding recess 411.1 are shown, and for track module 401' the free hanging end 431.1E' and a corresponding recess 411.1' are shown. The two free hanging ends 431.1E and 431.1E' face each other. Each of the two free hanging ends 431.1E and 431.1E' is flexible, illustrated by a double arrow 464.

Further, a misalignment of the two free hanging ends 431.1E and 431.1E' or the respective rods is shown in that track module 401' is shifted with respect to track module 401 by a distance d. This can be due to thermal expansion, for example, as explained above. It is noted that such misalignment or offset can occur in any direction lateral to the conveying path. Any shift along the conveying path direction is accounted for by the gap 460.

In addition, a wheel 451.1 of a carrier module, guided along the combined conveying path P' and passing the gap is illustrated. Due to the flexibility of the two free hanging ends 431.1E and 431.1E', any force acting on the wheel when passing the gap is reduced.

These free hanging ends allow the rods to elastically deform, which alleviates peak forces due to the misalignment of the rods. The free hanging ends behave like a cantilever beam and thus have predictable behaviour. This ensures that the rods can also deal with differences in wear between the rods of two different track modules. A length of the free hanging ends, seen along the conveying path, can be chosen as desired, e.g., between 0,5 and 1,5 cm.

Fig. 5 schematically illustrates a track system 505 according to an embodiment. The track system 505 comprises multiple track modules, parts of two of which are shown, a track module 501 and a track module 501'. Each of track module 501 and 501' can correspond to track module 301, for example. The two track modules 501, 501' are connected to each other with a gap in-between and such that the respective conveying paths from a combined conveying path P'.

For track module 501 the free hanging end 531.1E and a corresponding recess 511.1 in first side part 511 are shown, and for track module 501' the free hanging end 531.1E' and a corresponding recess 511.1' in first side part 511' are shown. The two free hanging ends 531.1E and 531.1E' face each other. Each of the two free hanging ends 531.1E and 531.1E' is flexible, just like illustrated for the situation in Fig. 4.

Further, the track system 505 comprises a support structure connecting element 570 that is configured as clip element. The two respective free hanging ends 531.1E, 531.1E' are connected to each other by means of said clip element 570. The recesses 511.1 and 511.1' are each formed as clip recess for receiving part of said clip element 570. Further, the clip element 570 is configured such that part of each of said free hanging end is contactable by a wheel of said carrier module; this can be seen in Fig.5 with part of a surface of the free hanging ends being visible. The clip element 570, can for example, be clipped onto the two free hanging ends from an inside of the track modules (where the carrier module is to be placed) and then rotated around the free hanging ends (which are parts of rods), such that the clip element is placed in the clip recesses.

Such a connection between two free hanging ends further reduces the misalignment between the rods by coupling them together, but simultaneously increases the stiffness of the free hanging ends.

In case of a misalignment of the two free hanging ends, e.g., as illustrated in Fig. 4, the support structure connecting element 570 results in a smooth transition between the two rods, resulting in a curved (e.g., S-shaped curve) of the two connected rods.

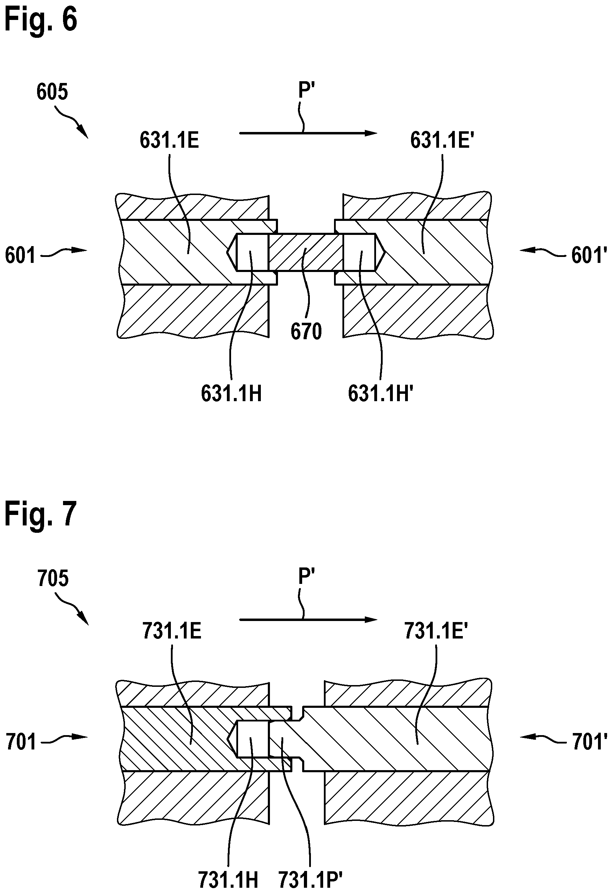

Fig. 6 schematically illustrates a track system 605 according to an embodiment. The track system 605 comprises multiple track modules, parts of two of which are shown, a track module 601 and a track module 601'. Each of track module 601 and 601' can correspond to track module 301, for example. The two track modules 601, 601' are connected to each other with a gap in-between and such that the respective conveying paths from a combined conveying path P'.

For track module 601 the free hanging end 631.1E is shown, and for track module 601' the free hanging end 631.1E' is shown. The two free hanging ends 631.1E and 631.1E' face each other. Each of the two free hanging ends 631.1E and 631.1E' is flexible, just like illustrated for the situation in Fig. 4.

Further, the track system 605 comprises a support structure connecting element 670 that is configured as dowel pin. The two respective free hanging ends 631.1E, 631.1E' are connected to each other by means of said dowel pin 670, in that the dowel pin is inserted into a pin hole 631.1H in the free hanging end 631.1E and a pin hole 631.H' in the free hanging end 6312.1E'. Since the dowel pin 670 is arranged centrally along axes of the rods, hat part of each of said free hanging end is contactable by a wheel of said carrier module.

Such a connection between two free hanging ends further reduces the misalignment between the rods by coupling them together, but simultaneously increases the stiffness of the free hanging ends.

Fig. 7 schematically illustrates a track system 705 according to an embodiment. The track system 705 comprises multiple track modules, parts of two of which are shown, a track module 701 and a track module 701'. Each of track module 701 and 701' can, basically, correspond to track module 301, for example. The two track modules 701, 701' are connected to each other with a gap in-between and such that the respective conveying paths from a combined conveying path P'.

For track module 701 the free hanging end 731.1E is shown, and for track module 701' the free hanging end 731.1E' is shown. The two free hanging ends 731.1E and 731.1E' face each other. Each of the two free hanging ends 731.1E and 731.1E' is flexible, just like illustrated for the situation in Fig. 4.

Free hanging end 731.1E has a pin hole 731.1 H at the end side and hanging end 731.1E' has a pin 731.1 P' at the end side of the free hanging end, wherein the pin is inserted into said pin hole.

Such a connection between two free hanging ends further reduces the misalignment between the rods by coupling them together, but simultaneously increases the stiffness of the free hanging ends.

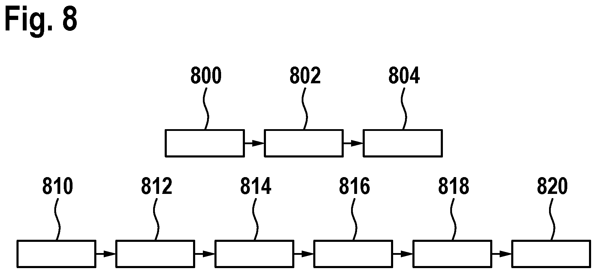

Fig. 8 schematically illustrates a method for setting up the track system and for replacing a selected track module of the track system. In step 800, two track modules are placed next to each other. In step 802, the two track modules are connected to each other, as shown, e.g., in Fig. 4. In step 804, the two respective free hanging ends are connected to each other, preferably, by means of a support structure connecting element as shown in any of Figs. 5 to 7, for example. These steps can be repeated for each set fo two neighbouring track modules that are to from the tracks system.

Further, if a selected one of the track modules is to be replaced, in step 810, neighbouring track modules are disconnected from the selected module. In step 812, the neighbouring track modules are moved away from the selected track module along the conveying path. This allows removing the dowel pin, for example. In step 814, the selected track module is removed and, step 816, replaced by a new track module. In step 818, the neighbouring track modules are moved towards the new track module along the conveying path and, step 820, are connected to the new track module.

## Claims

1. A track module (301, 401, 401', 501, 501', 601, 601', 701, 701') for a linear motor conveying system, said track module having a conveying path (P) for a carrier module (150, 350) to be received in said track module (301), said track module having two ends (315.1, 315.2) and the conveying path extending from a first one to a second one of said two ends,
wherein said track module (301, 401, 401', 501, 501', 601, 601', 701, 701') comprises a track component (310),
wherein said track module (301, 401, 401', 501, 501', 601, 601', 701, 701') comprises at least two supporting structures (331.1, 331.2, 331.3, 332.1, 332.2, 332.3), preferably, rods, each configured to act as one of at least two bearing surfaces for wheels of said carrier module (150, 350),
wherein at least one of said at least two supporting structures is, at at least one of the two ends, configured with a free hanging end (331.1E) such that, within a section along the conveying path (P), said free hanging end is not in contact with the track component (310).

2. The track module (301, 401, 401', 501, 501', 601, 601', 701, 701') of claim 1, wherein said at least one of said at least two supporting structures is, at both of the two ends, configured with a free hanging end.

3. The track module (301, 401, 401', 501, 501', 601, 601', 701, 701') of claim 1 or 2,
wherein said track component (410) comprises at least one recess (317.2),
wherein said at least one of said at least two supporting structures configured with a free hanging end is arranged in said at least one recess, apart from said free hanging end.

4. The track module (301, 401, 401', 501, 501', 601, 601', 701, 701') any one of the preceding claims, wherein the track component (301) comprises, along at least part of said conveying path (P, P1, P2), a first side part (311), a second side part (312) and a bottom part (313), wherein the first side part and the second side part are arranged opposite to each other,
wherein at least a first one of the at least two bearing surfaces is arranged at the first side part, and at least a second one of the at least two bearing surfaces is arranged the second side part, such that the at least one first bearing surface and the at least one second bearing surface face each other.

5. A track system (405, 505, 605, 705) comprising multiple track modules (401, 401', 501, 501', 601, 601', 701, 701') according to any one of the preceding claims, wherein two of said multiple track modules are connected to each other with a gap (460) in-between and such that the respective conveying paths from a combined conveying path (P'), wherein, preferably, said two track modules are connected to each other by means of track connection means (462) of the track system fixed to the respective track component.

6. The track system (405, 505, 605, 705) of claim 5, wherein said two track modules are arranged such that two respective free hanging ends, one of each of said two track modules, face each other.

7. The track system (405, 505, 605, 705) of claim 6, wherein said two respective free hanging ends are connected to and aligned with each other.

8. The track system (505, 605) of claim 7, further comprising a support structure connecting element, wherein said two respective free hanging ends are connected to each other by means of said support structure connecting element.

9. The track system (505) of claim 8, wherein said supporting structures configured with a free hanging end are configured as rods, and wherein said support structure connecting element (570) is configured as clip element.

10. The track system (505) of claim 9, wherein each of said two track modules comprises a clip recess in the respective track component for receiving part of said clip element, and wherein said clip element is configured such that part of each of said free hanging end is contactable by a wheel of said carrier module.

11. The track system (605) of claim 8, wherein said supporting structures configured with a free hanging end are configured as rods having a pin hole at the end side of the free hanging end, and wherein said support structure connecting element is configured as dowel pin inserted into each of the respective pin hole of the two respective free hanging ends facing each other.

12. The track system (705) of claim 7, wherein said supporting structures configured with a free hanging end are configured as rods, one of said supporting structures having a pin hole at the end side of the free hanging end and another one of said supporting structures having a pin at the end side of the free hanging end, wherein the pin is inserted into said pin hole.

13. A linear motor conveying system (100), comprising the track system of any one of claims 5 to 12, and one or more carrier modules (150, 350, 650) to be guided in the multiple track modules,
wherein the one or each of the more carrier modules (150, 350, 650) is received or receivable in the each of the more track modules, wherein the one or each of the more carrier modules comprises a carrier component and at least two wheels.

14. A method for setting up the track system of any one of claims 7 to 12, comprising the following steps:
- Placing (800) said two track modules next to each other,
- Connecting (802) said two track modules to each other, and
- Connecting (804) said two respective free hanging ends to each other, preferably, by means of a support structure connecting element.

15. A method for replacing a selected track module of the track system of any one of claims 5 to 12, comprising the following steps:
- Moving (812) at least one neighbouring track module, neighbouring the selected track module, away from the selected track module along the conveying path, preferably, after having disconnected the at least one neighbouring track module from the selected module,
- Removing (814) the selected track module,
- Placing (816) a new track module at the former place of the removed selected track module, and
- Moving (818) the at least one neighbouring track module towards the new track module along the conveying path, and preferably, connecting the at least one neighbouring track module to the new track module.
